# EUROPEAN PATENT APPLICATION

(11) **EP 0 764 510 A2**
(43) Date of publication of application: **26.03.1997**
(21) Application number: 96306055.3
(22) Date of filing: 20.08.1996
(51) Int. Cl.: B29C 45/17

(54) **Gas assist injection molding method and apparatus**

(30) Priority: 22.09.1995 US 532479
(71) Applicant: ICP Systems, Inc., Centerline, Michigan 48015-1226 (US)
(72) Inventor: Hendry, James, Brooksville, Florida 34609 (US)
(74) Representative: Price, Nigel John King

(57) **Abstract**

A gas assisted injection molding apparatus includes a molding injection assembly comprising an extruder barrel (32) having an elongated screw ram (40) that is axially and rotatably positioned therein. A quantity of gas is introduced into a charge within the extruder barrel (32) to form a combined charge of plastic and gas prior to the combined charge leaving the extruder barrel. In one embodiment, the gas enters the extruder barrel (32) through a channel (72) formed axially through the elongated screw ram (40). In another embodiment, the gas enters the extruder barrel (32') through a probe (130) that is movable through a port (126) formed in the side of the barrel body (32') to thereby deliver a gas charge to the center of the plastic charge.

## Description

The present invention relates to a method and apparatus for plastic injection molding in which a pressurized gas is used to assist in the molding process. More particularly, the present invention relates to such a method and apparatus in which the pressurized gas is introduced into a quantity of plastic melt through the rotating screw ram or through the wall of the extruder barrel.

Injection molds typically comprise stationary and moving mold halves (i.e., the core side and the cavity side) which are closed and clamped together to form a mold cavity therebetween for shaping articles from thermoplastic compositions. The thermoplastic is heated into a molten condition and is injected under pressure through a nozzle and into the mold cavity by means of a screw ram. Injection pressures of 2,000 to 10,000 psi are common at the gate locations. The plastic is allowed to cool to sufficiently harden the thermoplastic whereupon the mold is opened and the hardened articles are removed.

A traditional plastic molding problem is the formation of surface distortions or "sink marks" on the appearance side caused by ribs or bosses on the backside of a part resulting from the high injection pressures used to fill the cavity, the pack out pressure, or from an uneven pressure gradient resulting from the injection pressure at the gate being higher than the pressures at the extreme ends of the molding. High injection pressures can cause strain marks or molded in strain in the hardened article, resulting in warpage at once, or over a period of time after molding, or if the end use of the molding is in a high temperature area. When ribs are formed in the molding due to shrinkage differential, the wall thickness versus rib configuration can cause the ribs to buckle or bend the molding. In large projected area moldings where the plastic cannot flow from the gate to the end of the molding, hot runner molds are needed and high clamping forces (e.g., 1,000 to 10,000 pounds per square inch of projected area) are required to hold the mold halves together. These molds are costlier to build, and the gates from the hot runners can add weld lines to the product. Machines which can provide these high clamping forces are costly to operate.

The molding of thick-sectioned parts presents its own demands. One of the approaches taken in the molding of such parts is the use of structural foam. A part produced according to this process is relatively light in weight. However, the surface finish of such a product is very poor and typically requires extensive finishing operations. The method required for molding structural foam parts, however, is cumbersome, utilizing as it does relatively long cycle times (for the cooling of the plastic in the mold). The requisite method also produces parts having inconsistent surface finishes due to streaking. As the flowing plastic material enters the cavity, bubbles produced by the foaming agent form at the front of the flow near the point of entrance. Streaking results as the flowing material passes by the bubbles.

Another approach taken in the molding of thick-sectioned parts is a process that has come to be known as "gas assisted injection molding" in which an inert gas is injected through the plastic injection nozzle and directly into the thick areas of the melted thermoplastic, thereby creating hollow sections in the part. According to known gas assisted injection molding methods, the gas is injected after the molten plastic resin has substantially filled the mold cavity. With such conventional gas assisted molding process, sink marks and warpage can be minimized, and possibly eliminated. The gas is directed through a hollow (i.e., gas channel) of the material formed between the surface of the part and a backside detail, such as a rib. If so, the base of the rib must be made thicker to help direct the gas channel, which is just the opposite of normal design practice with plastic where ribs are made as thin as possible to try to eliminate shrinkage. With the gas channel at the base of a rib, material will shrink away from the inside surface of the channel as the molded part cools because the material is hottest at the center of the section. Therefore, as the plastic part shrinks during cooling, the sink mark on the visible outside surface is minimized.

A disadvantage in conventional gas assisted molding technology is that the possibility of achieving a Class A surface is inhibited by shadow marks caused by gas holes in the thicker areas of the molding, and gas permeation caused by the gas not being retained in the thicker areas and overflowing into the wall thickness of the molding. This causes thinning and weakening of the wall, raised areas, and blush marks.

Injection molding of parts utilizing a pressurized gas source is shown in United States Patent No. 5,344,596, issued on September 6, 1994, to Hendry for METHOD FOR FLUID COMPRESSION OF INJECTION MOLDED PLASTIC MATERIAL. While the method of this patent represents an improvement in the molding of articles of the type shown therein, there is always a need for improvements in forming low cost articles.

An object of the present invention is to provide a gas assisted molding apparatus that reduces the cost of gas delivery systems normally associated with gas injection molding.

A further object of the present invention is to provide such an apparatus that allows the gas and plastic charges to be maintained at the same pressures through being pressurized by the same member, an elongated screw ram.

Still a further object of the present invention is to provide such an apparatus that allows simultaneous injection of plastic and gas, thus eliminating the hesitation normally caused by the starting and stopping of the flow of plastic according to known gas assisted molding technologies.

Yet a further object of the present invention is to provide a gas assisted molding apparatus which allows simultaneous injection of the plastic and gas through a single delivery system.

An additional object of the present invention is to provide such an apparatus that allows the elimination of the hole normally formed by conventional gas injection molding operations caused by the gas entering the molding after injection.

Still a further object of the present invention is to provide such an apparatus which allows control of the exact amount of gas to be delivered to the molding to a significantly higher degree of accuracy than is currently known.

A further object of the present invention is to provide such an apparatus that allows simple operation of the injection and molding process and requires minimal maintenance.

Yet a further object of the present invention is to provide such an apparatus that eliminates costly electrical systems that are necessary for conventional gas injection units.

An additional object of the present invention is to provide such an apparatus that eliminates gas channels normally required to lead to bosses or remote areas of thick plastic.

These and other objects are accomplished by providing a gas assisted molding apparatus having gas introduced into the plastic charge while still in the extruder barrel and prior to the charge leaving the barrel to enter the mold cavity. The apparatus includes a conventional gas injection mold, a source of inert gas, and an injection assembly. The injection assembly includes an elongated screw ram that is rotatably and axially movable within an extruder barrel. In one embodiment, the gas is introduced into the plastic charge through a channel axially formed in the elongated screw ram itself, while in an alternate embodiment the gas is introduced through a probe that is retractably positioned through the wall of the extruder barrel. The flow of gas is controlled either by a timer or by limit switches.

The present invention will be more fully understood by reference to the following detailed description of the preferred embodiments of the present invention when read in conjunction with the accompanying drawings, in which like reference characters refer to like parts throughout the views, and in which:
Figure 1 is a view of the preferred embodiment of the gas assisted injection molding apparatus of the present invention showing the extruder barrel and an associated mold in cross section, an associated source of gas, and an elongated screw ram positioned in its between-cycle state within the barrel;
Figure 2 is a view similar to that of Figure 1 but illustrating the screw ram in a first exemplary position and a first charge of molten plastic deposited in front of the tapered tip of the screw ram;
Figure 3 is a view similar to that of Figure 2 but illustrating the screw ram in a second exemplary position and a bubble of gas formed within the charge of molten plastic adjacent to the tapered tip of the screw ram;
Figure 4 is a view similar to that of Figure 3 but illustrating the screw ram in a third exemplary position (or rearmost position) and a second charge of molten plastic deposited in front of the tapered tip of the screw ram;
Figure 5 is a view similar to that of Figure 1 illustrating the screw ram in its between-cycle position after completing the cycle illustrated in Figures 2 through 4 and showing the combined plastic charge and the gas injected into the mold cavity;
Figure 6 is a sectional view of a ball check valve assembly arranged within the tip of the elongated screw ram according to one embodiment of the present invention and illustrating the ball in its open position;
Figure 7 is a view similar to that of Figure 6 but illustrating the ball in its closed position;
Figure 8 is a sectional view of a poppet valve assembly arranged within the tip of the elongated screw ram according to another embodiment of the present invention and illustrating the poppet in its closed position;
Figure 9 is a view similar to that of Figure 8 but illustrating the poppet in its closed position;
Figure 10 is a view similar to that of Figure 4 but showing a pair of gas bubbles formed in the plastic charge; and
Figure 11 is a view of an alternate embodiment of the gas assisted injection molding apparatus of the present invention showing the extruder barrel and an associated mold in cross section, an associated source of gas, and an elongated screw ram positioned in its first exemplary position having a first charge of molten plastic deposited in front of its tapered tip.

The drawings disclose the preferred embodiment of the present invention. While the configurations according to the illustrated embodiment are preferred, it is envisioned that alternate configurations of the present invention may be adopted without deviating from the invention as portrayed. The preferred embodiment is discussed hereafter.

The various figures illustrate a molding apparatus and method for forming a molded component having a hollow portion. The operational steps generally include melting or plasticizing a solid thermoplastic material, feeding the plasticized material into an extruder barrel having an end closed by a valve, and continuously moving an elongated screw ram by rotation from its between-cycles position through various positions at which charges of plastic and at least one bubble of gas are deposited between the tapered tip of the screw ram and the closed valve. Variations of the method include depositing more than one bubble in the plasticized charge. Variations of this method also include the screw ram stopping and starting at and between selected operations as opposed to continuous operation. Furthermore, variations of the apparatus include feeding the gas into the extruder barrel either axially through the screw ram itself or through the wall of the barrel.

The component produced according to the method and apparatus of the present invention is relatively light weight and demonstrates weight and finish characteristics that are improved over products produced according to known methods. The component molded according to this process does not demonstrate the structural failings of those molded according to known methods.

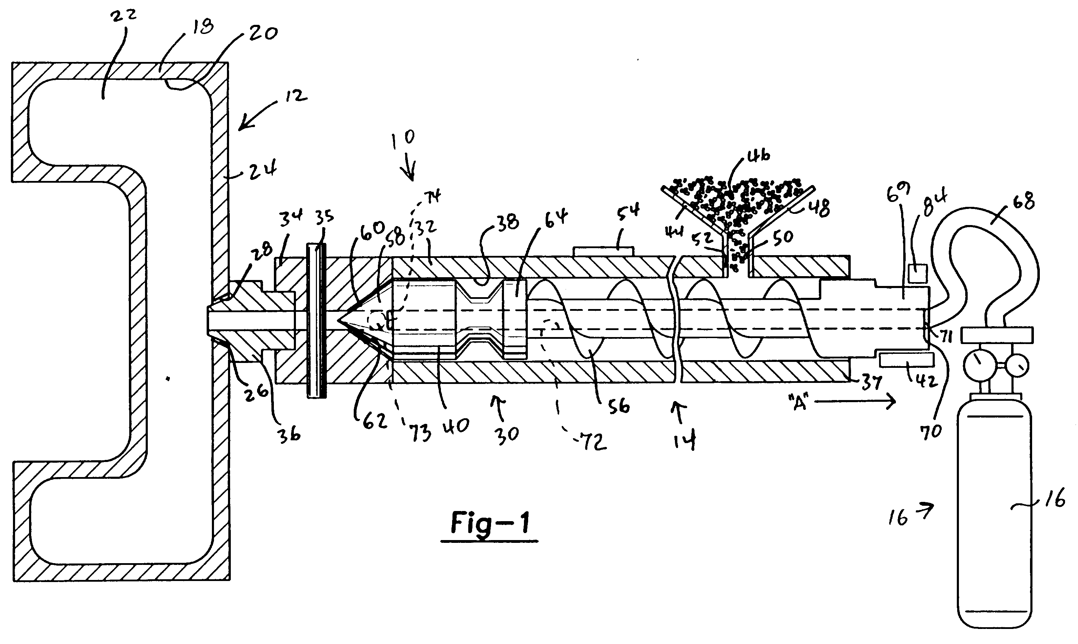

Referring to Figures 1 through 5, an injection cycle according to a preferred embodiment of the gas assisted injection molding apparatus of the present invention is illustrated. Specifically with respect to Figure 1, a gas assisted injecting molding apparatus, generally illustrated as 10, is illustrated. The apparatus 10 includes a mold assembly, generally illustrated as 12, an injection assembly, generally illustrated as 14, and a gas circuit, generally illustrated as 16.

The mold assembly 12 includes a mold body 18 having an interior wall 20 which defines a mold cavity 22. The body 18 includes a front wall 24. A sprue bushing 26 is positioned within an aperture 28 formed in the front wall 24. The sprue bushing 26 allows injected melted thermoplastic resin through the wall 24 and into the mold cavity 22. The mold body 18 and the mold cavity 22 as shown are for illustrative purposes only, and the mold used in cooperation with the injection assembly 14 could be of a variety of shapes and sizes. Accordingly, the mold assembly 12 as illustrated is to be interpreted as being exemplary, and not limiting, and may be suited for molding any of several components which may be of virtually any shape.

The injection assembly 14 comprises at least one extruder 30. The extruder 30 includes an extruder barrel 32. The elongated barrel 32 has a front end 34 with a nozzle shut off valve 35 rotatably or slidably provided therein. While either type of valve may be employed, the illustrated shut off valve 35 is of the rotatable type. Between the front end 34 of the extruder barrel 32 and the front wall 24 of the mold 18 is fitted a nozzle tip 36 which rests substantially against the sprue bushing 26. The extruder barrel 32 further includes a back end 37.

An axially-formed elongated chamber 38 formed within the extruder barrel 32 between the front end 34 and the back end 37. An elongated screw ram 40 is rotatably and movably positioned within the elongated chamber 38. Movement of the elongated screw ram 40 is effected by a driving motor, generally illustrated as 42. The driving motor 42 is of a conventional type that is known in the art and is capable of driving the elongated screw ram 40 rotationally with respect to the elongated chamber 38. (The elongated screw ram 40 is also capable of moving axially, although this movement is caused by the pressure of the charge plastic charge forming in front of the elongated screw ram 40 as will be described below.)

A plastic pellet hopper 44 adapted for receiving a quantity of solid plastic pellets 46 is fitted to the extruder barrel 32. The plastic pellet hopper 44 comprises a funnel-like body 48 having an outlet 50 that is mated to the extruder barrel 32 at an aperture 52 formed in the side of the extruder barrel 32. One or more heater bands 54 are fitted to the outer side of the extruder barrel 32 for heating the elongated barrel 32. The solid plastic pellets 46 enter the elongated chamber 38 from the plastic pellet hopper 44 through the aperture 52 in a manner that is known to those skilled in the art. The elongated screw ram 40 has a thread 56 formed thereon which forms flights which, upon rotation of the elongated screw ram 40, advance the plastic pellers toward the front end 34 of the extruder barrel 32. The solid plastic pellets 46 are melted and plasticized during their travel by heat from the extruder barrel 32 caused by the heater bands 54.

The elongated screw ram 40 includes a screw tip 58 having a convex conical surface 60. The convex conical surface 60 is matable with a concave conical surface 62 that defines the front end of the elongated chamber 38. A plastic check ring 64 is formed between the screw tip 58 and the thread 56. When the elongated screw ram 40 is in its between-cycles position as illustrated in Figure 1, the convex conical surface 60 of the screw tip 58 substantially nests against the concave conical surface 62.

Several types of thermoplastic resins can be used according to the present invention. By way of illustration, the method can be applied not only to general purpose plastics such as polyolefins, polystyrene, ABS resins, AS resins, PVC resins, methacrylic resins, and fluorine-based resins, but also engineering plastics such as nylon, saturated polyester resins, polycarbonate resins, polyacetal resins, polysuffones and modified polyphenylene ether resins. The method can also be used with fiber-reinforce resins.

The gas circuit 16 includes a source of gas 66 and a gas line 68. The type of gas contained within the source of gas 66 is an inert pressurized gas, such as nitrogen. The elongated screw ram 40 includes a back end 69 having a tap 70 formed therein. A gas control valve 71 is fitted between the source of gas 66 and the elongated screw ram 40 for controlling the flow of gas.

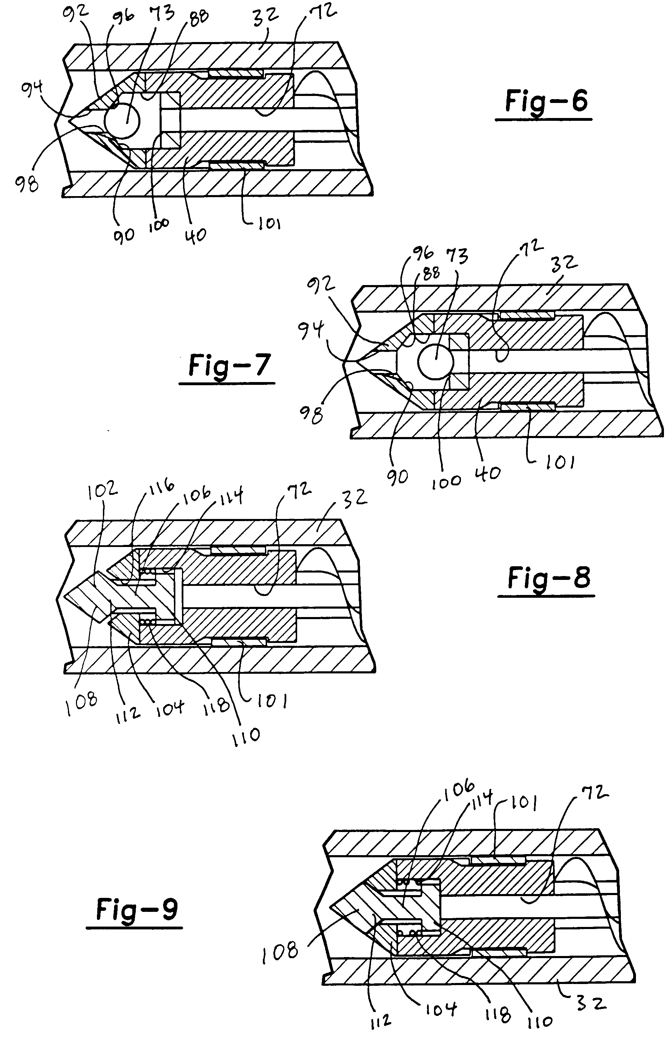

According to the preferred embodiment illustrated in Figures 1 through 6, a passageway 72 (shown in broken lines) is axially formed in the elongated screw ram 40. Within the screw tip 58 is movably provided a ball check 73 (shown in broken lines) seated on a high temperature gas seal 74 (also shown in broken lines). The ball check 73 is shown in detail in Figures 6 and 7 and is discussed below in relation thereto. (Alternatively, other valving means such as a poppet valve may be used in lieu of the ball check 73. A poppet valve is shown in Figures 8 and 9 and is discussed in relation thereto.)

Generally, the ball check 73 is movable between an open position and a closed position. One end of the gas line 68 is fluidly connected to the tap 70. Gas is selectively introduced into the passageway 72 from the source of gas 66 through the gas line 68. The gas is selectively blocked from passing by the ball check 73.

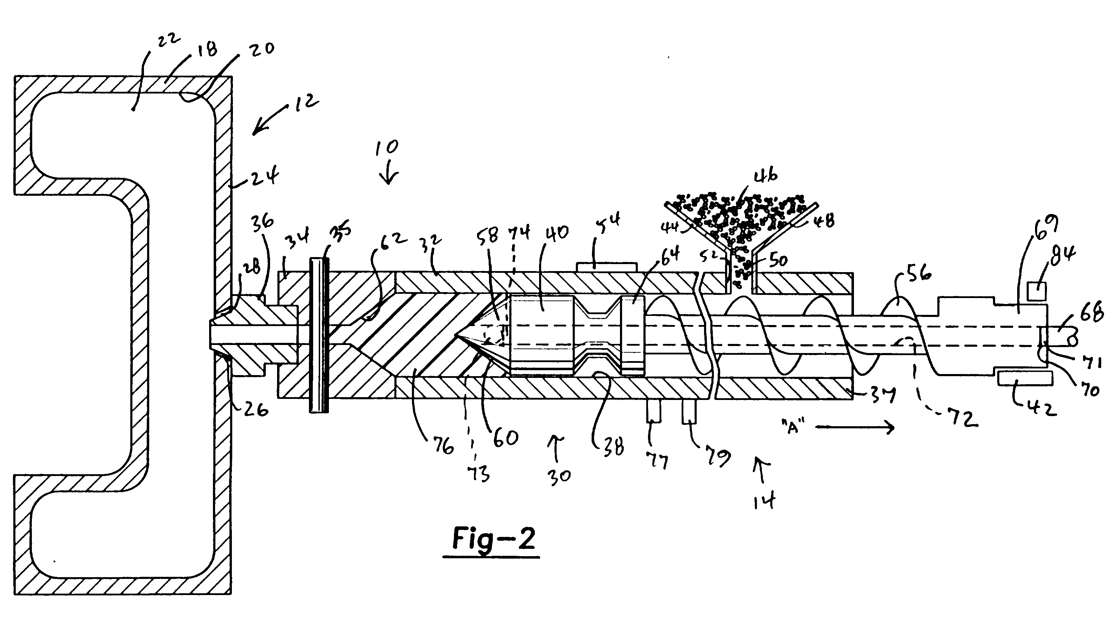

Referring to Figure 2, the first step of the injection process according to the present invention is illustrated. The nozzle shut off valve 35 is rotated to its closed position, as illustrated. The driving motor 42 is activated and the pellets 46 are advanced forward by the flights of the thread 56 upon rotation of the elongated screw ram 40. The pellets 46 are heated to form a flowable mass. A quantity of the plastic mass which defines a first charge is forced by the plastic check ring 64 and forward of the screw tip 58 between the convex conical surface 60 and the concave conical surface 62. The first charge, generally illustrated as 76, is prevented from passing into the mold cavity 22 of the mold assembly 12 by the closed shut off valve 35.

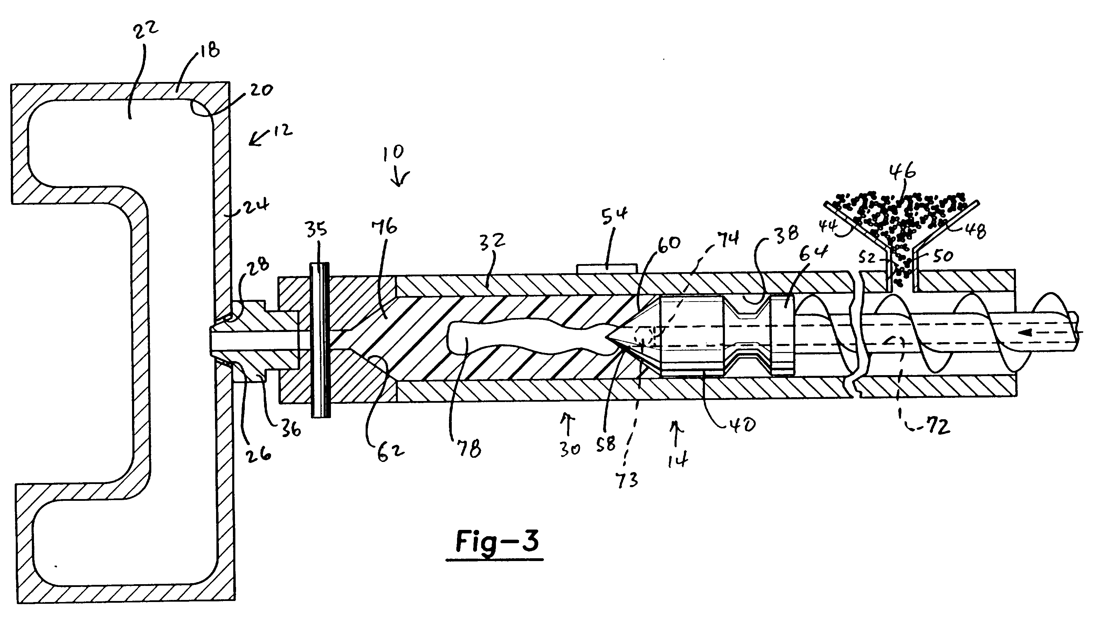

At this stage in the process the pressure of the gas is substantially the same as the pressure of the first charge 76, and the ball check 73 remains in its closed position. As the elongated screw ram 40 is rotated and is moved axially rearward (in response to the presence of the first charge 76) toward its second exemplary position as illustrated in Figure 3, the plastic check ring 64 (or some other portion of the elongated screw ram 40) reaches a first limit switch 77 (shown in Figure 2), the gas control valve 71 is opened and a measured quantity of gas is allowed into the passageway 72. (The quantity of gas is measured by time or by distance as is known in the art.) The pressure of the gas is increased slightly, thus upsetting the ball check 73 to move the ball from its closed position to its open position. A quantity of gas from the passageway 72 then bypasses the ball check 73 by lifting it off of the seal 74 and enters the elongated chamber 38 to form a gas charge or bubble 78 roughly in the center of the stream of the molten charge 76. The flow of gas is shut off by either a timer or by a second limit switch 79 which is attached to the gas control valve 71.

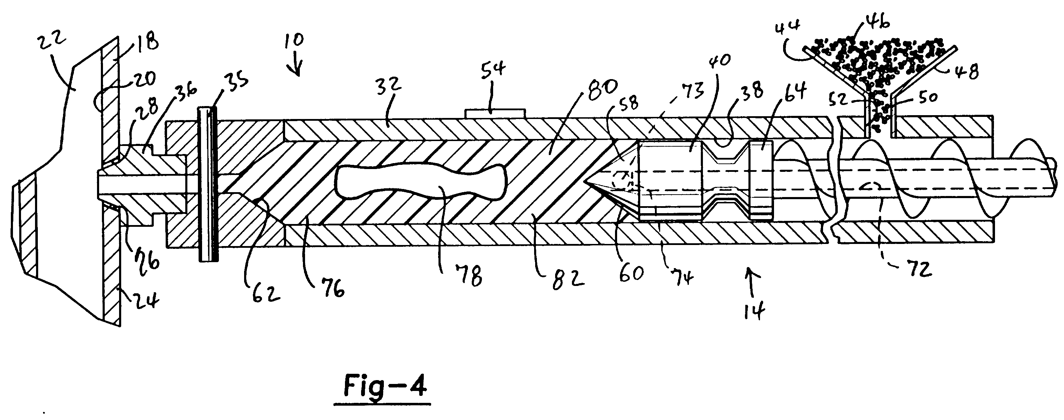

The elongated screw ram 40 continues to move rearward (with the flow of gas shut off) until its third exemplary position is reached, as illustrated in Figure 4. Before reaching this position, however, a second charge of molten plastic, generally illustrated as 80, is deposited in front of the screw tip 58. When fully positioned within the extruder barrel 32, the first and second charges 76 and 80, respectively, and the gas charge 78, in combination as a combined charge 82 are sufficient to form the desired component. This is subject to considerable variation depending on the size of the component. For example, if the injection molding apparatus has a maximum injection capacity of four pounds and the finished product was to have a weight of two pounds, then the elongated screw ram 40 would halt at its third exemplary position approximately half of the distance of the ram's total potential axial travel. At this stage the total amount of the charge (plastic and gas) may be readily adjusted by adding more or less gas to the charge. Furthermore, while the gas charge 78 is illustrated as being positioned more or less central between the screw tip 58 and the conical surface 62, it must be understood that the position of the charge 78 may be virtually anywhere between these two elements, with the only restriction being that the charge 78 always have a quantity of plastic between itself and the inner wall of the chamber 38, the concave conical surface 60, or the convex conical surface 62 so that no direct contact occurs therebetween.

It is sometimes necessary to relieve the pressure of the plastic charge accumulated between the screw tip 58 and the concave conical surface 62. Some resistance is commonly applied by an elastic or similar member (not shown) to the movement of the elongated screw ram 40 to its rearmost position. This measure puts pressure on the plastic and assist in providing the accumulated plastic a more uniform temperature. The pressure may be as high as 2000 pounds and, accordingly, the gas pressure also may be as high as 2000 pounds. Therefore, after the elongated screw ram 40 reaches its third exemplary position and enough combined plastic and gas charge fills the space between the screw tip 58 and the concave conical surface 62, rotation of the elongated screw ram 40 is halted and the screw 40 is pulled rearward by an axial driver 84 (shown in Figures 1, 2 and 5) in the direction of the arrow "A" (also shown in Figures 1 and 2). This procedure is known as "suck back" and might optionally be used in the method of the present invention to relieve some of the pressure off of the combined charge 82 (the combined plastic and gas) to as low as one atmosphere. This measure would serve to eliminate any possibility of the gas breaking out of the plastic melt (the first and second charges 76 and 80, respectively).

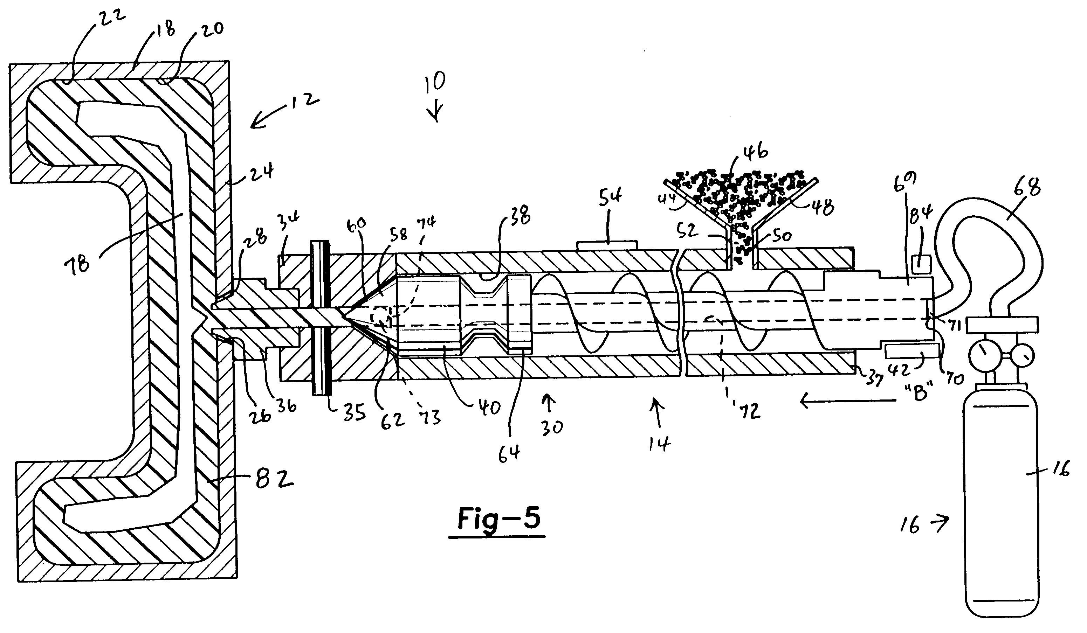

The final step of the injection process according to the present invention is illustrated in Figure 5 in which the shut off valve 53 is moved to its open position and the elongated screw ram 40 has been driven forward by the axial driver 84 in the direction of arrow "B" until the convex conical surface 60 rests against the concave conical surface 62, forcing the combined charge 82 out of the front end 34 of the extruder barrel 32, through the nozzle tip, and into the cavity 22 to form the component. The plastic charges 76 and 80 are moved at the same rate and the same pressure as is (are) the gas charge(s) 78, thus the gas cannot break through the plastic front but will seek out the areas where the molding is the thickest. After the injection of the combined charge 82 is completed and the formed component is removed from the mold assembly 12, the shut off valve 53 is rotated to its closed position and with the elongated screw ram 40 being in its between-cycles position, the injection cycle may again be undertaken.

Due to the low pressure of the gas used, it may not be necessary to relieve the gas pressure within the molding. However, if this is desired, a vent needle (not shown) could be positioned in the runner system of the article to selectively relieve the pressure.

Figures 6 through 9 illustrate two methods of stopping the flow of gas through the elongated screw ram 40. Specifically, Figures 6 and 7 illustrate in detail the ball check 73 discussed above, while Figures 8 and 9 illustrate in detail a poppet valve.

With respect to Figures 6 and 7, the ball check 73 is movably positioned in a cavity 88. The cavity 88 is formed between the front of the elongated screw ram 40 and an inner wall 90 of a cap 92 that is threadably or is otherwise matable with the ram 40. A gas port 94 is axially formed through the cap 92. Centrally formed in the inner wall 90 is a ball seat 96 that has a plurality of generally axial passageways 98 formed therein. The passageways 98 allow gas to pass from the cavity 88 to the gas port 94 when the ball check 73 is positioned in its open position as illustrated in Figure 6.

The ball check 73 assumes the open position of Figure 6 when the pressure of the gas flowing through the passageway 72 overcomes the pressure of the plastic present in front of the cap 92. When the pressure of the gas is less than that of the plastic, the ball check 73 moves to its closed position, as illustrated in Figure 7. In this position, the ball check 73 rests against a valve seat 100 formed at the area where the passageway 72 opens into the cavity 88. A movable collar 101 is peripherally fitted around the tip of the ram 40 to control the flow of plastic as is known in the art.

A practical drawback of the ball check arrangement of Figures 6 and 7 lies in the fact that when the ball check 73 moves from its closed position to its open position, an amount of plastic material must be forced out of the cavity 88 and out of the port 94 before the gas can begin to flow out of the cap 92. An arrangement for avoiding this problem is illustrated in Figures 8 and 9 which disclose a poppet arrangement.

With respect then to Figures 8 and 9, a poppet 102 is movably positioned within a cap 104 which, like the cap 92, may be threadably mated with the elongated screw ram 40. The poppet 102 includes a body 106 having a conical member 108 and a disk-shaped sealing member 110. The members 108 and 110 are connected by a shaft 112. The sealing member 110 is positioned in a cylindrical cavity 114 formed at the end of the ram 40. The cylindrical walls of the cavity 114 are in spaced apart relation from the cylindrical walls of the member 110. Similarly, the shaft 112 is movably positioned within a port 116 formed through the cap 104 such that the cylindrical wall of the shaft 112 is in spaced apart relation from the cylindrical wall defining the port 116. A spring 118 is provided between the cap 104 and the front face of the sealing member 110 to urge the poppet 102 to the closed position illustrated in Figure 9.

The poppet 102 is movable between an open position illustrated in Figure 8 and a closed position illustrated in Figure 9. When gas introduced into the passageway 72 overcomes the resistive force of the spring 118, the poppet 102 is moved to the open position illustrated in Figure 8. As the pressure of gas tapers off to the point that the resistive force of the spring 118 is no longer overcome, the poppet 102 moves to the closed position as illustrated in Figure 9. This arrangement eliminates plastic from entering the cap 104 or the port 116.

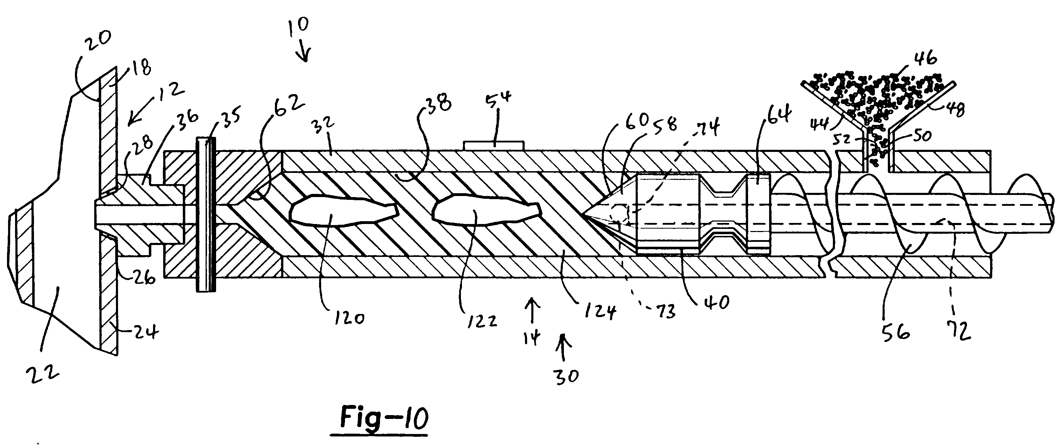

It may be desired to have more than a single gas charge injected into the plastic melt, as illustrated in Figure 10 in which a pair of adjacent gas charges 120 and 122 are positioned within a melt 124. The use of more than one gas charge is appropriate in those situations where a large, flat component is being formed or where it is desired to provide enough combined charge to fill a void. As noted above, the addition of more than one gas charge is relatively easy to accomplish.

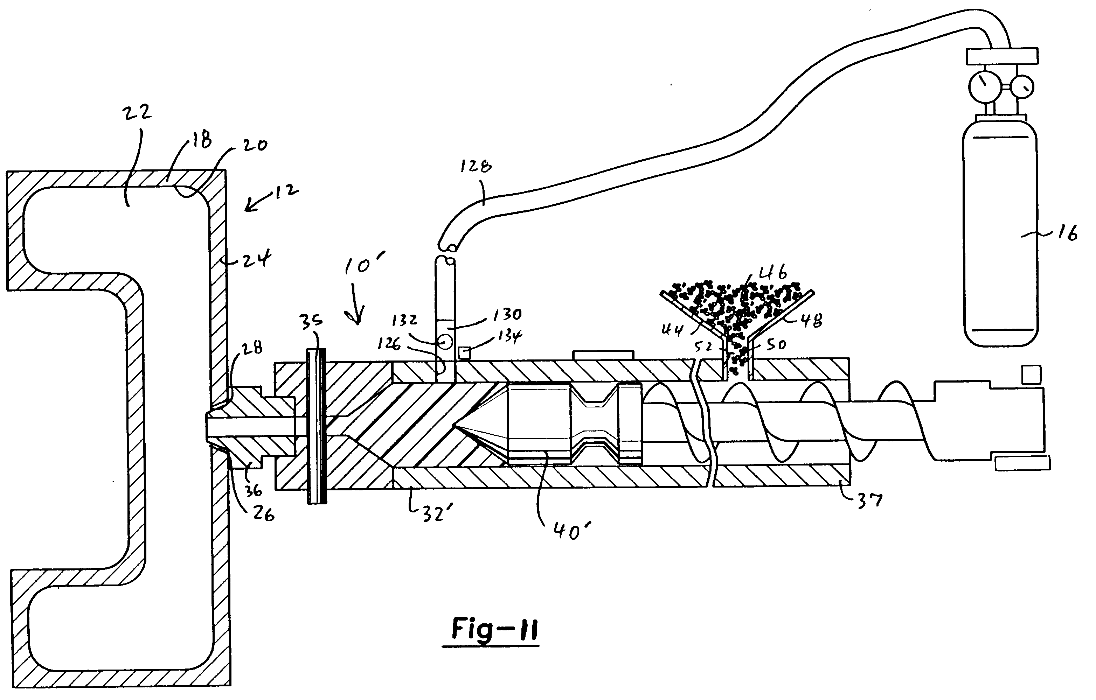

Figure 11 illustrates an alternate embodiment of the present invention in which an alternate method of introducing the gas into the charge is illustrated. According to this embodiment which is generally illustrated as 10', a molding assembly 12' is generally the same as the molding assembly 12 illustrated in Figures 1 through 5. Similarly, a gas circuit 16' is generally the same as the gas circuit 16. An injection assembly 14' is shown that is not the same as the assembly 14. Instead of delivering the gas into the charge through the elongated screw ram 40, the apparatus 10' includes an elongated screw ram 40' that has no axial channel but includes a port 126 is formed in the extruder barrel 32' into which is fitted an end of a gas line 128 that defines a movable probe 130. A ball check 132 is positioned within the probe 130 and is movable between closed and open positions. Upon an appropriate signal received from either a timer or a switch fitted to the extruder barrel 32', the probe 130 is moved into the barrel 32' to the approximate center of the charge, whereupon a quantity of gas is allowed to enter the charge. The probe 130 is moved by a probe driver 134 that is operated by an air cylinder or a hydraulic cylinder (neither shown). In all other respects the operation of the embodiment shown in Figure 11 is the same as the steps described above with respect to the first preferred embodiment.

Those skilled in the art can now appreciate from the foregoing description that the broad teachings of the present invention can be implemented in a variety of forms. Therefore, while this invention has been described in connection with particular examples thereof, the true scope of the invention should not be so limited since other modifications will become apparent to the skilled practitioner upon a study of the drawings, specification and following claims.

## Claims

1. A gas assisted molding apparatus for forming a component having at least one hollow portion, the apparatus comprising:
an extruder barrel;
an elongated screw ram movably provided within said extruder barrel, said extruder barrel and said elongated screw ram defining an injection assembly;
means for introducing a material into said injection assembly; and
an opening formed in said injection assembly through which a quantity of gas may be selectively introduced into said extruder barrel.

2. The molding apparatus of Claim 1, wherein said opening is formed in said elongated screw ram.

3. The molding apparatus of Claim 1, wherein said opening is formed in said extruder barrel.

4. The molding apparatus of Claim 1, further including a gas circuit connected to said opening, said gas circuit including a source of gas, a conduit connecting said source of gas and said opening, and a shut off valve fitted to said conduit.

5. The molding apparatus of Claim 4, further including a limit switch fitted to said barrel for controlling said shut off valve.

6. The molding apparatus of Claim 1, wherein said elongated screw ram further includes a tip and said opening is a channel formed through said ram and said tip, said ram further including a gas valve fitted within said tip.

7. The molding apparatus of Claim 6, wherein said gas valve is a ball check valve and includes a ball movable between a closed position and an open position and a valve seat.

8. The molding apparatus of Claim 6, wherein said gas valve is a poppet valve and includes a poppet movable between a closed position and an open position and a valve seat.

9. The molding apparatus of Claim 3, further including a source of gas, a probe, and a conduit connecting said source of gas and said probe, said probe being movably positioned in said barrel.

10. The molding apparatus of Claim 1, further including a shut off valve positioned in said extruder barrel.

11. A molding apparatus for forming a component having at least one gas-filled cavity formed therein, said apparatus comprising:
a barrel assembly consisting of an elongated screw ram, an extruder barrel, and an outlet fitted to said barrel assembly, said elongated screw ram being rotatably and axially movable within said extruder barrel;
a mold assembly having a mold cavity defined therein, said mold assembly having a front wall, said front wall having a port formed therein, said outlet of said barrel assembly being attachable to said port of said front wall;
means for introducing a flowable material into said barrel assembly to form a material charge; and
a port for introducing a gas into said material charge, said port being fitted to said barrel assembly.

12. The apparatus of Claim 11, wherein said elongated screw ram has a front end and a back end and said port defines a channel formed through said elongated screw between said front end and said back end.

13. The apparatus of Claim 12, further including a gas circuit, said gas circuit including a gas source and a conduit connecting said gas source with said elongated screw ram.

14. The apparatus of Claim 13, wherein said conduit includes a gas shut off valve movable between an open position and a closed position.

15. The apparatus of Claim 14, further including a first limit switch attached to said extruder barrel for moving said shut off valve to said open position.

16. The apparatus of Claim 15, further including a second limit switch attached to said extruder barrel for moving said shut off valve to said closed position.

17. The apparatus of Claim 12, wherein said front end of said elongated screw ram includes a valve positioned therein.

18. The apparatus of Claim 11, wherein said barrel includes an outer wall and said port is defined in said outer wall.

19. The apparatus of Claim 18, further including a gas circuit, said gas circuit including a gas source and a gas conduit connecting said gas source to said port.

20. The apparatus of Claim 19, further including a probe movably attached to said port, said probe having an open end.

21. The apparatus of Claim 20, further including a shut off valve fitted between said open end of said probe and said gas source.

22. The apparatus of Claim 20, further including means for moving said probe with respect to said port.

23. A method of forming an injected molded component having at least one gas-filled cavity formed therein, said method comprising the steps of:
forming a first charge of plasticized material in an extruder barrel between the front end of an elongated screw ram and the interior front end of said extruder barrel;
introducing a quantity of a gas into the first charge;
forming a second charge of plasticized material into the extruder barrel between said front end of said elongated screw ram and said interior front end of said extruder barrel, said first charge, said quantity of gas, and said second charge forming a combined charge; and
injecting said combined charge into a mold cavity.

24. The method of Claim 23, including the step of introducing a solid plastic material into said extruder barrel.

25. The method of Claim 23, including the step of heating said extruder barrel to plasticize said solid plastic material.

26. The method of Claim 23, including the step of introducing a second gas charge between said first and said second plastic charges.

27. The method of Claim 23, including the step of introducing said gas into said first plastic charge through said elongated screw ram.

28. The method of Claim 27, including the step of opening a gas shut off valve when said elongated screw ram reaches a first position.

29. The method of Claim 28, including the step of having said elongated ram engage a first limit switch to open said gas shut off valve.

30. The method of Claim 28, including the step of closing said gas shut off valve when said elongated screw ram reaches a second position.

31. The method of Claim 30, including the step of having said elongated ram engage a second limit switch to close said gas shut off valve.

32. The method of Claim 23, including the step of introducing said gas into said first charge through the wall of said extruder barrel.

33. The method of Claim 32, including the step of introducing said gas through a probe movably attached to said extruder barrel.

34. The method of Claim 33, including the step of controlling the flow of said gas into said extruder barrel by movement of a check valve.

35. The method of Claim 23, wherein said step of formation of a first charge of plasticized material is achieved at a first position of an elongated screw ram, said step of introducing said quantity of gas into the first charge is achieved at a second position of said ram, and said step of forming a second charge of plasticized material is achieved at a first position of said ram.

36. The method of Claim 35, wherein said ram moves continuously between said first, second and third positions.

37. The method of Claim 35, wherein movement of said ram is halted and restarted between said first and third positions.

38. The method of Claim 23, including a further step wherein a portion of said quantity of gas and a portion of said plasticized material are injected into said mold cavity simultaneously.
